(19) Europäisches Patentamt
European Patent Office
Office européen des brevets

(11) EP 4 043 242 B1

(12) EUROPEAN PATENT SPECIFICATION

(45) Date of publication and mention of the grant of the patent:
**11.03.2026 Bulletin 2026/11**

(21) Application number: **20869685.6**

(22) Date of filing: **24.09.2020**

(51) International Patent Classification (IPC):
***B60C 11/03*** *(2006.01)* ***B60C 3/04*** *(2006.01)*
***B60C 11/00*** *(2006.01)* ***B60C 11/01*** *(2006.01)*
***B60C 11/13*** *(2006.01)* ***B60C 1/00*** *(2006.01)*
***B60C 11/04*** *(2006.01)*

(52) Cooperative Patent Classification (CPC):
**B60C 11/13; B60C 1/0016; B60C 3/04; B60C 11/0083; B60C 11/01; B60C 11/033; B60C 11/0332; B60C 11/04;** B60C 2011/0025; B60C 2011/0353; B60C 2011/0355

(86) International application number:
**PCT/JP2020/036051**

(87) International publication number:
**WO 2021/060382 (01.04.2021 Gazette 2021/13)**

# (54) PNEUMATIC TIRE

LUFTREIFEN

PNEUMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.09.2019 JP 2019176700**

(43) Date of publication of application:
**17.08.2022 Bulletin 2022/33**

(73) Proprietor: **Sumitomo Rubber Industries, Ltd.**
**Kobe-shi, Hyogo 651-0072 (JP)**

(72) Inventors:
- **KOJIMA Ryoji**
  **Kobe-shi, Hyogo 651-0072 (JP)**
- **TSUCHIDA Tsuyoshi**
  **Kobe-shi, Hyogo 651-0072 (JP)**
- **TOMISAKI Yukari**
  **Kobe-shi, Hyogo 651-0072 (JP)**
- **UNNO Yuma**
  **Kobe-shi, Hyogo 651-0072 (JP)**

(74) Representative: **Manitz Finsterwald**
**Patent- und Rechtsanwaltspartnerschaft mbB**
**Martin-Greif-Straße 1**
**80336 München (DE)**

(56) References cited:
**EP-A1- 3 279 011**
**EP-A1- 3 279 012**
**EP-A2- 2 591 923**
**JP-A- 2015 214 287**
**JP-A- 2015 506 875**
**JP-A- 2016 168 911**
**JP-A- 2017 206 194**
**JP-A- 2019 094 007**
**JP-A- 2019 099 062**
**JP-A- 2019 116 574**
**JP-A- 2019 131 756**

- **A M PICHUGIN ET AL: "Use of the mechanical loss tangent at different temperatures for assessing the evaluation of tyres", INTERNATIONAL POLYMER SCIENCE AND TECHNOLOGY, 1 December 2006 (2006-12-01), Shropshire, pages T19 - 16, XP055409838, Retrieved from the Internet <URL:http://www.polymerjournals.com/pdfdownload/985604.pdf> [retrieved on 20231018]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 043 242 B1

## Description

[TECHNICAL FIELD]

The present invention relates to a pneumatic tire, specifically, a pneumatic tire having excellent steering stability and wet grip performance.

[BACKGROUND ART]

Pneumatic tires (hereinafter, also simply referred to as "tires") are required to be designed with a good balance between steering stability and wet grip performance, and in recent years, there has been an increasing demand for improvement in steering stability and wet grip performance.

Under such circumstances, studies on compounding materials for rubber compositions constituting treads (Patent Documents 1 and 2) and studies on tread patterns (Patent Documents 3 and 4) have been carried out. Further prior art tires are described by Patent documents 5 and 6.

[PRIOR ART DOCUMENT]

[PATENT DOCUMENT]

Patent Document 1: JP-A-2012-229285
Patent Document 2: JP-A-2013-107989
Patent Document 3: JP-A-2014-177238
Patent Document 4: JP-A-2015-147543
Patent Document 5: EP 3 279 012 A1
Patent Document 6: JP-A-2017-206194

[SUMMARY OF THE INVENTION]

[PROBLEMS TO BE SOLVED BY THE INVENTION]

However, with conventional tires, both steering stability and wet grip performance are not yet fully compatible.

Therefore, an object of the present invention is to provide a pneumatic tire having both steering stability and wet grip performance.

[MEANS FOR SOLVING PROBLEMS]

The present inventor has conducted diligent studies and found that the above-mentioned problems can be solved by the invention described below, and has completed the present invention.

The invention is defined in claim 1 and comprises:

a pneumatic tire having a tread having two or three circumferential main grooves extending continuously in the circumferential direction of the tire, wherein
the tread has as the circumferential main grooves a crown main groove formed in the widthwise central portion of the tread and a shoulder main groove formed in the widthwise end of the tread,
the shoulder main groove positioned on the outermost side when mounted on a vehicle has the ratio of the groove width W1 at the groove depth 90% position when the groove depth at the groove bottom is 100% to the groove width W2 on the tread surface (W1/W2) of 0.30 to 0.75,
the ratio of the cross-sectional area S1 of the shoulder main groove to the cross-sectional area S2 of the crown main groove (S1/S2) is 0.40 to 1.0, and
the rubber composition forming the tread has the following characteristics wherein
5°Ctanδ is 0.10 to 0.60,
|20°Ctanδ-50°Ctanδ| is 0.10 or less, and
20°CE' is 8.0 MPa or more.

Moreover, the ratio of the total cross-sectional area ($mm^2$) of the crown main groove to the width (mm) of the

ground contact surface is 0.4 to 1.4.

Preferred aspects of the invention are set forth in the dependent claims.

According to the present invention, it is possible to provide a pneumatic tire having both steering stability and wet grip performance.

[BRIEF EXPLANATION OF DRAWINGS]

[FIG. 1] (a) a schematic cross-sectional view in the width direction of a pneumatic tire and (b) a schematic development view of a tread according to an embodiment of the pneumatic tire of the present invention.

[FIG. 2] (a)a schematic cross-sectional view in the width direction and (b) an enlarged schematic cross-sectional view of a shoulder main groove 11 according to an embodiment of the pneumatic tire of the present invention.

[EMBODIMENTS FOR CARRYING OUT THE INVENTION]

Hereinafter, the present invention will be specifically described based on the embodiments.

[1] Characteristics of the tire according to the present invention

First, the characteristics of the tire according to the present invention will be described.

The present inventors have considered that the shape of the tread and the rubber composition must be related to each other in order to achieve both steering stability and wet grip performance, and conducted various experiments and studies. As a result, the present inventors have found that the tread should have the shape and physical properties shown below to solve the above-mentioned problems, and completed the present invention.

First, regarding the shape of the tread, two or three circumferential main grooves extending continuously in the tire circumferential direction are formed, and these circumferential main grooves include a crown main groove formed in the central portion of the tread in the width direction, and a shoulder main groove formed at the widthwise end of the tread. And, the shoulder main groove positioned on the outermost side when mounted on a vehicle has the ratio of the groove width W1 at the groove depth 90% position when the groove depth at the groove bottom is 100% to the groove width W2 on the tread surface (W1). / W2) being 0.30 to 0.75, and the ratio of the cross-sectional area S1 of the shoulder main groove to the cross-sectional area S2 of the crown main groove (S1/S2) being 0.40 to 1.0.

Next, the rubber composition forming the tread has physical properties wherein 5°Ctanδ is 0.10 to 0.60, | 20°Ctanδ-50°Ctanδ| is 0.10 or less, and 20°CE' is 8.0 MPa or more. Here, tan δ is a loss tangent measured under the conditions of a frequency of 10 Hz, an initial strain of 2%, and a dynamic strain rate of 1% using a viscoelasticity measuring device manufactured by Leometrics, or the like at 5°C, 20°C, and 50°C. And E' is the dynamic storage elastic modulus measured at 20°C.

As described above, since the tread has an appropriate shape and physical properties, the shape of the tread and the physical properties of the rubber composition cooperate with each other to provide a pneumatic tire that are compatible with both steering stability and wet grip performance. The present invention as described above exerts a remarkable effect particularly when applied to a passenger car tire.

[2] Embodiment of the present invention

Hereinafter, the present invention will be specifically described based on the embodiments. In the following, "1. Tread shape", "2. Tread rubber composition", and "3. Tire" will be described in this order.

1. Tread shape

FIG. 1 is (a) a schematic cross-sectional view in the width direction of a pneumatic tire and (b) a schematic development view of a tread according to a pneumatic tire of the present embodiment. Further, FIG. 2 is (a) a schematic cross-sectional view in the width direction and (b) an enlarged schematic cross-sectional view of a shoulder main groove 11 according to an embodiment of a pneumatic tire of the present embodiment.

As shown in FIGs. 1 and 2, in the tire according to the present embodiment, three circumferential main grooves 11, 12, and 13 extending continuously in the tire circumferential direction are formed on the surface of the tread 10. Here, the circumferential main groove refers to a groove having a cross-sectional area of 10 mm2 or more in the tire width direction, and the circumferential main groove 12 formed in the central portion of the tread in the width direction is the crown main groove, and the circumferential main grooves 11 and 13 formed at the widthwise end of the tread are called shoulder

main grooves.

In the present embodiment, in the shoulder main groove 11 positioned on the outermost side when mounted on a vehicle, the ratio (W1/W2) of the groove width W1 at a groove depth of 90% when the groove depth at the groove bottom is 100% to the groove width W2 at the tread surface is 0.30 to 0.75, and the ratio (S1 / S2) of the cross-sectional area S1 of the shoulder main groove 11 to the cross-sectional area S2 of the crown main groove 12 is 0.40 to 1.0. In addition, in FIGs 1 and 2, 20 is a land portion formed between adjacent circumferential main grooves, and this land portion 20 serves as a ground contact surface. In the case of a tire whose mounting direction to the vehicle is not specified, the circumferential main groove positioned farthest from the equator of the tire in the tire width direction (at least one if there are two) is the circumferential main groove positioned on the outermost side when mounted on the vehicle.

By providing such a circumferential main groove, it is possible to secure performance such as drainage during running, improve wet grip performance, and sufficiently secure the rigidity of the tread on land. It is possible to improve the steering stability.

In addition, in this embodiment, in FIGs. 1 and 2, the number of circumferential main grooves extending continuously and linearly in the tire circumferential direction is three, but the number may be two, and the tire may have zigzag grooves. Further, on the surface of the tread, in addition to the circumferential main groove, a circumferential groove having a cross-sectional area in the tire width direction of less than 10 $mm^2$ (not shown in the FIGs.) may be provided, and a fine groove extending in a direction other than the circumferential direction may be provided.

By providing these grooves, the ground contact surface of the tread can be sufficiently brought into contact with the road surface and water can be drained smoothly, so that the wet grip performance can be further improved and the steering stability can be further improved. Further, the contact area of the tread with the road surface can be reduced and the amount of wear can be reduced.

Here, "the ground contact surface of the tread" refers to the outer peripheral surface of the tire that comes into contact with the road surface over the entire circumference in a state in which the tire is rim-assembled on the regular rim and is rolled with a load corresponding to the maximum load capacity at the regular state where no load is applied and the regular internal pressure is applied.

Here, the "regular rim" is a rim defined for each tire in the standard system including the standard on which the tire is based. For example, in the case of JATTA (Japan Automobile Tire Association), standard rims in applicable sizes described in "JATTA YEAR BOOK", in the case of ETRTO (The European Tire and Rim Technical Organization), "Measuring Rim" described in "STANDARDS MANUAL", and in the case of TRA (The Tire and Rim Association, Inc.), "Design Rim" described in "YEAR BOOK" mean the "regular rim". In the case of tires that are not specified in the standard, it means a rim having the smallest rim diameter, and then having the narrowest width among the rims which can be assembled and the internal pressure can be maintained, that is, rims not causing air leakage between the rim and the tire.

The "regular internal pressure" is the air pressure defined for each tire by the standard, and means the maximum air pressure in the case of JATTA, the maximum value described in the table "TIRE LOAD LIMITS AT VARIOUS COLD INFLATION PRESSURES" in the case of TRA, and "INFLATION PRESSURES" in the case of ETRTO.

The "regular load" is the load defined for each tire by each of the above standards, and refers to the maximum mass that can be loaded on the tire. It means the maximum load capacity in the case of JATTA, the maximum value described in the table "TIRE LOAD LIMITS AT VARIOUS COLD INFLATION PRESSURES" in the case of TRA, and "LOAD CAPACITY" in the case of ETRTO.

In the present embodiment, the tread is divided into four regions by three circumferential main grooves, and the radius of curvature of the contour line of the region closest to the tire equatorial line among the four regions is preferably larger than any radius of curvature of the contour lines of the other regions.

That is, in FIG. 1(a), four regions, region 1, region 2, region 3 and region 4 are divided by the three circumferential main grooves 11, 12, and 13. The contour line of the region closest to the tire equator (in FIG. 1(a), the two regions 2 and 3 are corresponded to, since symmetrical in the width direction) has the largest radius of curvature.

This not only suppresses the occurrence of cracks at the bottom of the circumferential main grooves on the "tread tread" and improves wet grip performance and steering stability, but also fully demonstrates the durability of the tire.

The "tread tread" refers to the outer peripheral surface of the tire that comes into contact with the road surface when the tire is assembled to the regular rim, the regular internal pressure is applied, and the tire is rolled under the load of the regular load.

The "radius of curvature" of the contour line is the radius of curvature of an arc obtained by approximating the curve formed by the contour line of the tread tread in a cross-sectional view in the tire width direction by a minimum square method.

In the tire according to the present embodiment, the tread has a ratio of the total cross-sectional area of the crown main groove ($mm^2$) to the width (mm) of the ground contact surface being 0.4 to 1.4.

As a result, the tread tread of the tire running on the wet road surface can be firmly in contact with the road surface, and the water on the road surface can be efficiently drained by the crown main groove, so that sufficient wet grip performance is exhibited.

That is, when the ratio is less than 0.4, the drainage effect is not sufficiently obtained and the wet grip performance deteriorates, while when it exceeds 1.4, the block rigidity decreases, and conversely wet grip performance may deteriorate and wear resistance may also deteriorate.

Further, in the tire according to the present embodiment, it is preferable that the radius of curvature of the region of the tread outside the shoulder main groove in the tire width direction is 0.8 to 1.7 times the tread ground contact half width.

As a result, the contact pressure of the tread in the tire width direction can be made uniform, so that the uneven wear resistance at the shoulder portion can be improved and sufficient steering stability can be exhibited.

That is, when the radius of curvature in the region outside the shoulder main groove in the tire width direction is less than 0.8 times the tread contact half width, the contact pressure at the shoulder portion becomes too small, while in the case exceeding 1.7 times, the contact pressure of the shoulder portion may become too large, and uneven wear may occur at the shoulder portion.

Further, in the tire according to the present embodiment, it is preferable that the tread has a ratio of the tread contact width to the section width of 55 to 80%.

As a result, rolling resistance can be sufficiently reduced and steering stability can be improved.

That is, when the ratio (TW/SW) of the tread contact width TW to the section width SW exceeds 80%, the tread contact width becomes large and the rolling resistance of the tire cannot be reduced, while when it is less than 55%, the lateral force that the tire receives from the running surface is too small, and there is a risk that sufficient steering stability cannot be obtained.

Then, by appropriately setting the TW / SW as described above, even when the sidewall portion rubs against the running surface or the like, when running on an uneven running surface, when cornering, when riding on a curb, when running with low tire pressure, or the like, the sidewall portion is not easily damaged, and sufficient durability can be exhibited.

In the above, the "section width" means the maximum width in the tire axial direction, and the "tread contact width TW" means the maximum linear distance in the tire axial direction on the contact surface with the flat plate when the tire is mounted on the "regular rim" to fill the "specified air pressure" and statically placed on the flat plate in a vertical position, and a load corresponding to the "specified mass" is applied.

In the ground contact surface of the tread, the land portion preferably occupies 35 to 80% of the total area of the ground contact surface (area of the ground contact surface when it is assumed that the tread has no groove: ground contact area). As a result, the rigidity of the tread can be sufficiently ensured.

2. Tread rubber composition

(1) Rubber physical characteristics

In the present embodiment, as described above, the rubber composition forming the tread is characterized by having rubber physical characteristics wherein 5°Ctan$\delta$ is 0.10 to 0.60, |20°Ctan$\delta$-50°Ctan$\delta$| is 0.10 or less, and 20°C E' is 8.0 MPa or more.

A tire provided with a tread formed into the above-mentioned shape using a rubber composition having these physical characteristics can exhibit excellent steering stability as well as excellent wet grip performance on a wet road surface.

Then, in the present embodiment, the 5°Ctan $\delta$ is more preferably 0.40 to 0.60. Further, the |20°Ctan$\delta$-50°Ctan$\delta$| is preferably more than 0 and 0.05 or less.

The above-mentioned values of tan$\delta$ and E' are measured, for example, using a viscoelasticity measuring device manufactured by Leometrics under the conditions of a frequency of 10 Hz, an initial strain of 2%, and a dynamic strain rate of 1% at each temperature.

(2) Composition of rubber composition

The rubber composition having each of the above-mentioned rubber physical characteristics can be obtained from the rubber components described below and other compounding materials.

(a) Rubber component

As the rubber component, diene rubber can be preferably used. Specifically, a rubber such as natural rubber (NR), isoprene rubber, butadiene rubber (BR), styrene butadiene rubber (SBR), acrylonitrile butadiene rubber (NBR), and chloroprene rubber (CR), butyl rubber (IIR), and styrene-isoprene-butadiene copolymer rubber (SIBR), and the like can be used. These may be used alone or in combination of two or more, but in the present embodiment, a combination of SBR and BR is preferably used.

(A) Isoprene rubber

When the rubber composition contains isoprene-based rubber, the content (total content) of the isoprene-based rubber is, for example, 5 to 100% by mass in 100% by mass of the rubber component. Examples of the isoprene-based rubber include natural rubber (NR), isoprene rubber (IR), reformed NR, modified NR, modified IR and the like.

As the NR, those which are common in the tire industry, for example, SIR20, RSS # 3, TSR20 and the like, can be used. The IR is not particularly limited, and those which are common in the tire industry, for example, IR 2200 or the like, can be used. Examples of the reformed NR includes deproteinized natural rubber (DPNR), high-purity natural rubber (UPNR), and the like. Examples of the modified NR includes epoxidized natural rubber (ENR), hydrogenated natural rubber (HNR), grafted natural rubber, and the like. Examples of the modified IR include epoxidized isoprene rubber, hydrogenated isoprene rubber, and grafted isoprene rubber, and the like. These may be used alone or in combination of two or more.

(B) SBR

When the rubber composition contains SBR, the content of SBR is, for example, 5 to 100% by mass in 100 % by mass of the rubber component. The weight average molecular weight of SBR is, for example, 100,000 to 2,000,000. The amount of styrene in SBR is, for example, 5 to 50% by mass, and the amount of styrene in the diene rubber is less than 30% by mass. The amount of vinyl (1,2-bonded butadiene unit amount) of SBR is, for example, 5 to 70% by mass. The structure identification of SBR (measurement of the amount of styrene and the amount of vinyl) can be performed, for example, using an apparatus of the JNM-ECA series manufactured by JEOL Ltd.

The SBR is not particularly limited, and for example, emulsion-polymerized styrene-butadiene rubber (E-SBR), solution-polymerized styrene-butadiene rubber (S-SBR) and the like can be used. The SBR may be either a non-modified SBR or a modified SBR.

The modified SBR may be any SBR having a functional group that interacts with a filler such as silica. Examples thereof include SBR (terminal modified SBR having the functional group at the end) in which at least one end of the SBR is modified with a compound having the above functional group (modifying agent), main chain modified SBR having the functional group in the main chain, and main chain terminal modified SBR having the functional group in the main chain and the terminal (for example, main chain terminal modified SBR having the above functional group in the main chain and at least one end modified with the above modifying agent) and terminally modified SBR which is modified (coupling) by a polyfunctional compound having two or more epoxy groups in the molecule and into which a hydroxyl group or an epoxy group has been introduced.

Examples of the functional group include an amino group, an amide group, a silyl group, an alkoxysilyl group, an isocyanate group, an imino group, an imidazole group, a urea group, an ether group, a carbonyl group, an oxycarbonyl group, a mercapto group, a sulfide group, a disulfide group, a sulfonyl group, a sulfinyl group, a thiocarbonyl group, an ammonium group, an imide group, a hydrazo group, an azo group, a diazo group, a carboxyl group, a nitrile group, a pyridyl group, an alkoxy group, a hydroxyl group, an oxy group and an epoxy group. These functional groups may have a substituent.

Further, as the modified SBR, for example, an SBR modified with a compound (modifying agent) represented by the following formula can be used.

[Chemical 1]

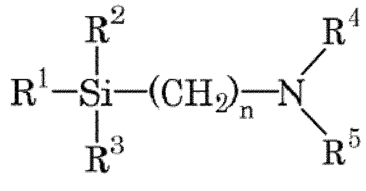

In the formula, R1, R2 and R3, which are the same or different, represent an alkyl group, an alkoxy group, a silyloxy group, an acetal group, a carboxyl group (-COOH), a mercapto group (-SH) or a derivative thereof; R4 and R5, which are the same or different, represent hydrogen atom or an alkyl group, and R4 and R5 may combine to form a ring structure with nitrogen atoms; and n represents an integer.

As the modified SBR modified by the compound (modifier) represented by the above formula, SBR in which the polymerization end (active end) of the solution-polymerized styrene-butadiene rubber (S-SBR) is modified by the compound represented by the above formula (modified SBR described in JP-A-2010-111753 or the like) can be used.

Alkoxy groups are preferable as R1, R2 and R3 (preferably an alkoxy group having 1 to 8 carbon atoms, and more

preferably an alkoxy group having 1 to 4 carbon atoms). Alkyl groups (preferably alkyl groups having 1 to 3 carbon atoms) are suitable as R4 and R5. Preferably, n is 1 to 5, more preferably 2 to 4, and further more preferably 3. Further, when R4 and R5 are combined to form a ring structure together with a nitrogen atom, a 4 to 8-membered ring is preferable. The alkoxy group also includes a cycloalkoxy group (cyclohexyloxy group, etc.) and an aryloxy group (phenoxy group, benzyloxy group, etc.).

Specific examples of the above modifiers include 2-dimethylaminoethyltrimethoxysilane, 3-dimethylaminopropyltrimethoxysilane, 2-dimethylaminoethyltriethoxysilane, 3-dimethylaminopropyltriethoxysilane, 2-diethylaminoethyltrimethoxysilane, 3-diethylaminopropyl-trimethoxysilane, 2-diethylaminoethyltriethoxysilane, and 3-diethyl-aminopropyltriethoxysilane. These may be used alone or in combination of two or more.

Further, as the modified SBR, a modified SBR modified with the following compound (modifier) can also be used. Examples of the modifier include polyglycidyl ethers of polyhydric alcohols such as ethyleneglycol diglycidyl ether, glycerin triglycidyl ether, trimethylolethane-triglycidyl ether and trimethylolpropane triglycidyl ether;

polyglycidyl ether of aromatic compound having two or more of phenol group such as diglycidylated bisphenol A;
polyepoxy compounds such as 1,4-diglycidylbenzene, 1,3,5-triglycidylbenzene, and polyepoxidized liquid polybutadiene;
epoxy group-containing tertiary amines such as 4,4'-diglycidyldiphenylamine and 4,4'-diglycidyldibenzyl-methylamine;
diglycidylamino compounds such as diglycidylaniline, N, N'-diglycidyl-4-glycidyloxyaniline, diglycidylorthotoluidine, tetraglycidylmetaxylene diamine , tetraglycidylaminodiphenylmethane, tetraglycidyl-p-phenylenediamine, diglycidylaminomethylcyclohexane and tetraglycidyl-1,3-bisaminomethyl cyclohexane;
amino group-containing acid chlorides such as bis-(1-methylpropyl) carbamate chloride, 4-morpholincarbonyl chloride, 1-pyrrolidincarbonyl chloride, N, N-dimethylcarbamate chloride and N, N-diethylcarbamate chloride;
epoxy group-containing silane compounds such as 1,3-bis-(glycidyloxypropyl)tetramethyldisiloxane and (3-glycidyloxypropyl) - pentamethyldisiloxane;
sulfide group-containing silane compounds such as (trimethylsilyl) [3-(trimethoxysilyl) propyl] sulfide, (trimethylsilyl) [3- (triethoxysilyl) propyl] sulfide, (trimethylsilyl) [3- (tripropoxysilyl) propyl] sulfide, (trimethylsilyl) [3- (tributoxysilyl) propyl] sulfide, (trimethylsilyl) [3-(methyldimethoxysilyl) propyl] sulfide, (trimethylsilyl) [3-(methyldiethoxysilyl) propyl] sulfide, (trimethylsilyl) [3-(methyldipropoxysilyl) propyl] sulfide, and (trimethylsilyl) [3-(methyldibutoxysilyl) propyl] sulfide;
N-substituted aziridine compound such as ethyleneimine and propyleneimine;
alkoxysilanes such as methyltriethoxy silane, N, N-bis (trimethylsilyl) -3-aminopropyltrimethoxysilane, N, N-bis (trimethylsilyl) -3-aminopropyltriethoxysilane, N, N-bis (trimethylsilyl) aminoethyltrimethoxysilane andN, N-bis (trimethylsilyl) aminoethyltriethoxysilane;
(thio) benzophenone compounds having an amino group and / or a substituted amino group such as 4-N, N-dimethylaminobenzophenone, 4-N, N-di-t-butylaminobenzophenone, 4-N, N-diphenylamino benzophenone, 4,4'-bis (dimethylamino) benzophenone, 4,4'-bis (diethylamino) benzophenone, 4,4'-bis (diphenylamino) benzophenone and N, N, N', N'-bis-(tetraethylamino) benzophenone;
benzaldehyde compounds having an amino group and / or a substituted amino group such as 4-N, N-dimethylaminobenzaldehyde, 4-N, N-diphenylaminobenzaldehyde and 4-N, N-divinylamino benzaldehyde;
N-substituted pyrrolidone such as N-methyl-2-pyrrolidone, N-vinyl-2-pyrrolidone, N-phenyl-2-pyrrolidone, N-t-butyl-2-pyrrolidone and N-methyl-5-methyl-2-pyrrolidone N-substituted piperidone such as N-methyl-2-piperidone, N-vinyl-2-piperidone and N-phenyl-2-piperidone; and
N-substituted lactams such as N-methyl-ε-caprolactam, N-phenyl-ε-caprolactam, N-methyl-ω-laurilolactam, N-vinyl-ω-laurillolactam, N-methyl-β-propiolactam and N-phenyl-β-propiolactam. In addition to the above, N, N-bis- (2,3-epoxypropoxy) -aniline, 4,4-methylene-bis- (N, N-glycidylaniline), tris-(2,3-epoxypropyl)-1,3,5-triazine-2,4,6-triones, N,N-diethylacetamide, N-methylmaleimide, N, N-diethylurea, 1,3-dimethylethyleneurea , 1,3-divinylethyleneurea, 1,3-diethyl-2-imidazolidinone, 1-methyl-3-ethyl-2-imidazolidinone, 4-N,N-dimethylaminoacetophen, 4-N,N-diethylaminoacetophenone, 1,3-bis (diphenylamino)-2-propanone, 1,7-bis (methylethylamino)-4-heptanone, and the like can be mentioned also. The modification with the above compound (modifier) can be carried out by a known method.

As the SBR, for example, SBR manufactured and sold by Sumitomo Chemical Co., Ltd., JSR Corporation, Asahi Kasei Co., Ltd., Nippon Zeon Corporation, etc. can be used. The SBR may be used alone or in combination of two or more.

(C) BR

When the rubber composition contains BR, the content of BR is, for example, 5 to 100% by mass in 100% by mass of the rubber component. The weight average molecular weight of BR is, for example, 100,000 to 2,000,000. The amount

of vinyl in BR is, for example, 1 to 30% by mass. The cis amount of BR is, for example, 1 to 98% by mass. The amount of trans of BR is, for example, 1 to 60% by mass.

The BR is not particularly limited, and BR having a high cis content (cis content of 90% or more), BR having a low cis content, BR containing syndiotactic polybutadiene crystals, and the like can be used. The BR may be either a non-modified BR or a modified BR, and examples of the modified BR include a modified BR into which the above-mentioned functional group has been introduced. These may be used alone or in combination of two or more. The cis content can be measured by infrared absorption spectroscopy.

As the BR, for example, products manufactured by Ube Industries, Ltd., JSR Corporation, Asahi Kasei Corporation, and Nippon Zeon Corporation can be used.

(D) Other rubber components

Further, as other rubber components, if necessary, rubber (polymer) generally used in the production of tires such as nitrile rubber (NBR) may be contained.

(b) Compounding materials other than rubber components

(A) Carbon black

The rubber composition preferably contains carbon black. The content of carbon black is, for example, 1 to 200 parts by mass with respect to 100 parts by mass of the rubber component.

The carbon black is not particularly limited, and it includes furnace black (furness carbon black) such as SAF, ISAF, HAF, MAF, FEF, SRF, GPF, APF, FF, CF, SCF and ECF; acetylene black (acetylene carbon black); thermal black (thermal carbon black) such as FT and MT; channel black (channel carbon black) such as EPC, MPC and CC; graphite and the like. These may be used alone or in combination of two or more.

The nitrogen adsorption specific surface area ($N_2SA$) of carbon black is, for example, 30 to 250$m^2$/g. The absorption amount of dibutyl phthalate (DBP) of carbon black is, for example, 50 to 250ml/100 g. The nitrogen adsorption specific surface area of carbon black is measured according to ASTM D4820-93, and the amount of DBP absorbed is measured according to ASTM D2414-93.

The specific carbon black is not particularly limited, and examples thereof include N134, N110, N220, N234, N219, N339, N330, N326, N351, N550, and N762. Commercially available products include, for example, products manufactured by Asahi Carbon Co., Ltd., Cabot Japan Co., Ltd., Tokai Carbon Co., Ltd., Mitsubishi Chemical Corporation, Lion Corporation, Shin Nikka Carbon Co., Ltd., Columbia Carbon Co., Ltd., etc. These may be used alone or in combination of two or more.

(B) Silica

The rubber composition preferably contains silica. Examples of silica include dry silica (anhydrous silica) and wet silica (hydrous silica). Of these, wet silica is preferable because it has a large number of silanol groups.

The content of silica is, for example, 1 to 200 parts by mass, preferably more than 50 parts by mass and less than 150 parts by mass with respect to 100 parts by mass of the rubber component.

The nitrogen adsorption specific surface area ($N_2SA$) of silica is, for example, 40 to 300 $m^2$/g, and preferably, is 180$m^2$/g or more and 300$m^2$/g or less in consideration of improvement in reinforcing property and wear resistance. The $N_2SA$ of silica is a value measured by the BET method according to ASTM D3037-93.

As the silica, for example, products manufacture by Evonik, Degussa, Rhodia, Tosoh Silica Co., Ltd., Solvay Japan Co., Ltd., and Tokuyama Corporation can be used.

(C) Silane coupling agent

The rubber composition preferably contains a silane coupling agent together with silica. The silane coupling agent is not particularly limited, and examples thereof include sulfide based such as bis (3-triethoxysilylpropyl) tetrasulfide, bis (2-triethoxysilylethyl) tetrasulfide, bis (4-triethoxysilylbutyl) tetrasulfide, bis (3-trimethoxysilylpropyl) tetrasulfide, bis (2-trimethoxysilylethyl) tetrasulfide, bis (2-triethoxysilylethyl) trisulfide, bis (4-trimethoxysilylbutyl) trisulfide, bis (3-triethoxysilylpropyl) disulfide, bis (2-triethoxysilylethyl) disulfide, bis (4-triethoxysilylbutyl) disulfide, bis (3-trimethoxysilylpropyl) disulfide, bis (2-trimethoxysilylethyl) ) disulfide, bis (4-trimethoxysilylbutyl) disulfide, 3-trimethoxysilylpropyl-N,N-dimethylthiocarbamoyltetrasulfide, 2-triethoxysilylethyl-N,N-dimethylthiocarbamoyltetrasulfide and 3-triethoxysilylpropyl ethacrylate monosulfide;

mercapto based such as 3-mercaptopropyltrimethoxysilane, 2-mercaptoethyltriethoxysilane and NXT and NXT-Z manufactured by Momentive;
vinyl based such as vinyl triethoxysilane and vinyl trimethoxysilane; amino based such as 3-aminopropyltriethoxysilane and 3-aminopropyltrimethoxysilane;
glycidoxy based such as γ-glycidoxypropyltriethoxysilane and γ-glycidoxypropyltrimethoxysilane;
nitro-based such as 3-nitropropyltrimethoxysilane and 3-nitropropyltriethoxysilane; and
chloro-based such as 3-chloropropyltrimethoxysilane and 3-chloropropyltriethoxysilane. These may be used alone or in combination of two or more.

As the silane coupling agent, for example, products manufactured by Evonik, Degussa, Momentive, Shinetsu Silicone Co., Ltd., Tokyo Chemical Industry Co., Ltd., Azumax Co., Ltd., Toray Dow Corning Co., Ltd. can be used.
The content of the silane coupling agent is, for example, 3 to 25 parts by mass based on 100 parts by mass of silica, and is preferably 5% by mass or more and 15% by mass or less.

(D) Polymer component

The rubber composition may contain a polymer component other than the rubber component, such as a liquid polymer or a solid polymer.
The liquid polymer is a polymer in a liquid state at room temperature (25°C), and the solid polymer is a polymer in a solid state at room temperature (25°C). Examples of liquid polymers and solid polymers include farnesene based polymers, liquid diene type polymers, styrene based resins, cumarone-indene resins, terpene resins, p-t-butylphenol acetylene resins, phenol resins, C5 resins, C9 resins, C5C9 resins and acrylic resins.
The farnesene-based polymer is a polymer obtained by polymerizing farnesene, and has a structural unit based on farnesene. Farnesene includes isomers such as α-farnesene ((3E, 7E)-3,7,11-trimethyl-1,3,6,10-dodecatriene) and β-farnesene (7,11-dimethyl-3-methylene-1, 6, 10-dodecatriene).
The farnesene-based polymer may be a homopolymer of farnesene (farnesene homopolymer) or a copolymer of farnesene and a vinyl monomer (farnesene-vinyl monomer copolymer).
Examples of the vinyl monomer include aromatic vinyl compounds such as styrene, 2-methylstyrene, 3-methylstyrene, 4-methylstyrene, α-methylstyrene, 2,4-dimethylstyrene, 2,4-diisopropylstyrene, 4-tert-butylstyrene, 5-t-butyl-2-methylstyrene, vinylethylbenzene, divinylbenzene, trivinylbenzene, divinylnaphthalene, tert-butoxystyrene, vinylbenzyldimethylamine, (4-vinylbenzyl) dimethylaminoethyl ether, N, N-dimethylaminoethyl styrene, N, N-dimethylaminomethyl styrene, 2-ethyl styrene, 3-ethyl styrene, 4-ethyl styrene, 2-t-butyl styrene, 3-t-butyl styrene, 4-t-butyl styrene, vinyl xylene, vinylnaphthalene, vinyltoluene, vinylpyridine, diphenylethylene, tertiary amino group-containing diphenylethylene; and conjugated diene compounds such as butadiene and isoprene. These may be used alone or in combination of two or more.
As the farnesene-based polymer, a liquid farnesene-based polymer can be used. The liquid farnesene-based polymer is a farnesene-based polymer that is in liquid state at room temperature (25°C), and a polymer having a weight average molecular weight (Mw) of 3,000 to 300,000 can be used.
The glass transition temperature (Tg) of the farnesene polymer is, for example, -100°C to -10°C. The Tg is a value measured under the condition of a temperature rise rate of 10°C/min using a differential scanning calorimeter (Q200) manufactured by Thai Airways Instruments Japan Co., Ltd. in accordance with JIS-K7121: 1987.
The melt viscosity of the farnesene polymer is, for example, 0.1 to 500 Pa·s. The melt viscosity is a value measured at 38°C using a Brookfield type viscometer (manufactured by BROOKFIELD ENGINEERING LABS. INC.).
In the farnesene-vinyl monomer copolymer, the mass-based copolymerization ratio (farnesene / vinyl monomer) of farnesene and the vinyl monomer is, for example, 40/60 to 90/10.
The content of the farnesene based polymer is, for example, 1.0 to 50.0 parts by mass with respect to 100 parts by mass of the rubber component.
As the farnesene polymer, for example, a product manufactured by Kuraray Co., Ltd. can be used.
Examples of the liquid diene polymer include a liquid styrene-butadiene copolymer (liquid SBR), a liquid butadiene polymer (liquid BR), a liquid isoprene polymer (liquid IR), and a liquid styrene isoprene copolymer (liquid SIR).
Liquid diene polymer has a weight average molecular weight in terms of polystyrene measured by gel permeation chromatography (GPC) (Mw) of, for example, $1.0 \times 10^3$ to $2.0 \times 10^5$. In the present specification, Mw of the liquid diene polymer is a value in terms of polystyrene measured by gel permeation chromatography (GPC).
The content of the liquid polymer (total content of the liquid farnesene based polymer, the liquid diene type polymer, etc.) is, for example, 1 to 100 parts by mass with respect to 100 parts by mass of the rubber component.
The cumarone-indene resin is a resin containing cumarone and indene as monomer components constituting the skeleton (main chain) of the resin. Examples of the monomer component contained in the skeleton other than cumarone and indene include styrene, α-methylstyrene, methylindene, vinyltoluene and the like.

The content of the cumarone-indene resin is, for example, 1.0 to 50.0 parts by mass with respect to 100 parts by mass of the rubber component.

The hydroxyl value (OH value) of the cumarone-indene resin is, for example, 15 mg to 150 mgKOH / g. The OH value is the amount of potassium hydroxide in milligrams required to neutralize acetic acid bonded to a hydroxyl group when acetylating 1 g of the resin, and is the value measured by the potential difference dropping method (JIS K 0070: JIS K 0070: 1992).

The softening point of the cumarone-indene resin is, for example, 30 to 160°C. The softening point is the temperature at which the ball drops when the softening point defined in JIS K 62201: 2001 is measured by a ring-ball type softening point measuring device.

The styrene-based resin is a polymer using a styrene-based monomer as a constituent monomer, and examples thereof include a polymer obtained by polymerizing a styrene-based monomer as a main component (50% by mass or more). Specifically, a homopolymer obtained by independently polymerizing styrene-based monomers, such as styrene, o-methylstyrene, m-methylstyrene, p-methylstyrene, α-methylstyrene, p-methoxystyrene, p-tert-butylstyrene, p-phenylstyrene, o-chlorostyrene, m-chlorostyrene and p-chlorostyrene, a copolymer obtained by copolymerizing two or more types of styrene-based monomers, and a copolymer obtained by copolymerizing a styrene-based monomer and another monomer that can be copolymerized with the styrene-based monomer.

Examples of the other monomer include acrylonitriles such as acrylonitrile and methacrylonitrile; unsaturated carboxylic acids such as acrylic acid and methacrylic acid; unsaturated carboxylic acid esters such as methyl acrylate and methyl methacrylate; dienes such as chloroprene, butadiene and isoprene; olefins such as 1-butene and 1-pentene; and α, β-unsaturated carboxylic acids and acid anhydrides thereof such as maleic anhydride.

Examples of the terpene-based resin include polyterpenes, terpene phenols, and aromatic-modified terpene resins. Polyterpenes are resins obtained by polymerizing terpene compounds, and their hydrogenated products. Terpene compounds are hydrocarbons represented by a composition of ($C_5$ Hs)n and their oxygenated derivatives, and are compounds having a terpene, classified in monoterpenes ($C_{10}H_{16}$), sesquiterpene ($C_{15}H_{24}$), diterpenes ($C_{20}H_{32}$), etc., as a basic skeleton. Examples thereof include $\alpha$ -pinene, β-pinene, dipentene, limonene, myrcene, aloossimen, ocimene, α-phellandrene, α-terpinene, $\gamma$ -terpinene, terpinolene, 1,8-cineol, 1,4-cineol, α-terpineol, β-terpineol, and $\gamma$ -terpineol.

Examples of the polyterpene include terpene resins, such as α-pinene resin, β-pinene resin, limonene resin, dipentene resin, and β-pinene/limonene resin, made from the above-mentioned terpene compound, and hydrogenated terpene resin obtained by hydrogenating the terpene resin can also be mentioned as an example. Examples of the terpene phenol include a resin obtained by copolymerizing the above-mentioned terpene compound and a phenol-based compound, and a resin obtained by hydrogenating the resin. Specifically, a resin obtained by condensing the above-mentioned terpene compound, phenolic compound and the formalin can be mentioned. Examples of the phenolic compound include phenol, bisphenol A, cresol, xylenol and the like. Examples of the aromatic-modified terpene resin include a resin obtained by modifying the terpene resin with an aromatic compound, and a resin obtained by hydrogenating the resin. The aromatic compound is not particularly limited as long as it has an aromatic ring, but for example, phenol compounds such as phenol, alkylphenol, alkoxyphenol, and unsaturated hydrocarbon group-containing phenol; naphthol compounds such as naphthol, alkylnaphthol, alkoxynaphthol, and unsaturated hydrocarbon group-containing naphthol; styrene derivatives such as styrene, alkylstyrene, alkoxystyrene, and unsaturated hydrocarbon group-containing styrene; cumarone; indene; and the like can be mentioned.

The acrylic resin is not particularly limited, but for example, a solvent-free acrylic resin can be used.

As the solvent-free acrylic resin, a (meth) acrylic resin (polymer), synthesized by a high-temperature continuous polymerization method (high-temperature continuous lump polymerization method) described in USP4,414,370, JP-A-S59-6207, JP-B-H5-58005, JP-A-H1-313522, USP5,010,166, Toagosei Annual Report TREND2000 No. 3, pp42-45, etc. without using polymerization initiators, chain transfer agents, organic solvents, etc. as auxiliary raw materials as much as possible, can be mentioned. Note that, "(meth) acrylic" means meth acrylic and acrylic.

Examples of the monomer component constituting the acrylic resin include (meta) acrylic acid derivatives such as (meth) acrylic acid, (meth) acrylic acid ester (alkyl ester, aryl ester, aralkyl ester, etc.), (meth) acrylamide, and (meth) acrylamide derivative.

As the monomer component constituting the acrylic resin, styrene, α-methylstyrene, vinyltoluene, vinylnaphthalene, divinylbenzene, trivinylbenzene, divinylnaphthalene, and the like can be used, together with (meth) acrylic acid and/or (meth) acrylic acid derivative.

The acrylic resin may be a resin composed of only a (meth) acrylic component or a resin also having a component other than the (meth) acrylic component as a component. The said acrylic resin may have a hydroxyl group, a carboxyl group, a silanol group or the like.

The content of the solid polymer (total content of the solid cumarone-indene resin and the like) is, for example, 1.0 to 100.0 parts by mass with respect to 100 parts by mass of the rubber component.

Examples of polymer components such as liquid polymer and solid polymer include products manufactured by Maruzen Petrochemical Co., Ltd., Sumitomo Bakelite Co., Ltd., Yasuhara Chemical Co., Ltd., Toso Co., Ltd., Rutgers

Chemicals Co., Ltd., BASF Co., Ltd., Arizona Chemical Co., Ltd., Nitto Chemical Co., Ltd., Nippon Catalyst Co., Ltd., JX Energy Co., Ltd., Arakawa Chemical Industry Co., Ltd., and Taoka Chemical Industry Co., Ltd, and the like.

(E) Oil

The rubber composition may contain oil as a plasticizer component. Content of the oil is, for example, 1.0 to 100.0 parts by mass. The content of oil also includes the amount of oil contained in rubber (oil spread rubber).
Examples of the oil include process oils, vegetable oils and fats, and mixtures thereof. As the process oil, for example, a paraffin-based process oil, an aroma-based process oil, a naphthenic process oil, or the like can be used. Vegetable oils and fats include castor oil, cottonseed oil, linseed oil, rapeseed oil, soybean oil, palm oil, palm oil, peanut oil, rosin, pine oil, pine tar, tall oil, corn oil, rice oil, beni flower oil, sesame oil, olive oil, sunflower oil, palm kernel oil, camellia oil, jojoba oil, macadamia nut oil, and tung oil. These may be used alone or in combination of two or more.
Examples of oils include products of Idemitsu Kosan Co., Ltd., Sankyo Yuka Kogyo Co., Ltd., Japan Energy Co., Ltd., Orisoi Co., Ltd., H & R Co., Ltd., Toyokuni Oil Co., Ltd., Showa Shell Sekiyu Co., Ltd., Fuji Kosan Co., Ltd. and the like.

(F) Low temperature plasticizer

The rubber composition may contain a low-temperature plasticizer as a plasticizer component in addition to the above-mentioned oil. Examples of the low temperature plasticizer include liquid components such as dioctyl phthalate (DOP), dibutyl phthalate (DBP), tris(2-ethylhexyl) phosphate (TOP), and bis(2-ethylhexyl) sebacate (DOS). When the low-temperature plasticizer is contained, the total content of the plasticizer component with respect to 100 parts by mass of the rubber component is, for example, 1 to 60 parts by mass.

(G) Wax

The rubber composition preferably contains wax. The content of the wax is, for example, 0.5 to 20 parts by mass with respect to 100 parts by mass of the rubber component.
The wax is not particularly limited, and examples thereof include petroleum wax such as paraffin wax and microcrystalline wax; natural wax such as plant wax and animal wax; and synthetic wax such as a polymer such as ethylene and propylene. These may be used alone or in combination of two or more.
As the wax, for example, products manufactured by Ouchi Shinko Kagaku Kogyo Co., Ltd., Nippon Seiro Co., Ltd., and Seiko Kagaku Co., Ltd., and the like can be used.

(H) Anti-aging agent

The rubber composition preferably contains an anti-aging agent. The content of the anti-aging agent is, for example, 1 to 10 parts by mass with respect to 100 parts by mass of the rubber component.
Examples of the anti-aging agent include naphthylamine-based anti-aging agents such as phenyl-α-naphthylamine; diphenylamine-based anti-aging agents such as octylated diphenylamine and 4,4'-bis (α, α'-dimethylbenzyl) diphenylamine; p-phenylenediamine-based anti-aging agent such as N-isopropyl-N'-phenyl-p-phenylenediamine, N-(1,3-dimethylbutyl)-N'-phenyl-p-phenylenediamine, and N, N'-di-2-naphthyl-p-phenylenediamine; quinoline-based anti-aging agent such as a polymer of 2,2,4-trimethyl-1,2-dihydroquinolin; monophenolic anti-aging agents such as 2,6-di-t-butyl-4-methylphenol, and styrenated phenol; and bis, tris, polyphenolic anti-aging agent such as tetrakis-[methylene-3-(3',5'-di-t-butyl-4'-hydroxyphenyl) propionate] methane. These may be used alone or in combination of two or more.
As the anti-aging agent, for example, products of Seiko Chemical Co., Ltd., Sumitomo Chemical Co., Ltd., Ouchi Shinko Chemical Industry Co., Ltd., Flexis Co., Ltd., etc. can be used.

(E) Stearic acid

The rubber composition may contain stearic acid. The content of stearic acid is, for example, 0.5 to 10.0 parts by mass with respect to 100 parts by mass of the rubber component. As the stearic acid, conventionally known ones can be used, and for example, products of NOF Corporation, NOF Corporation, Kao Corporation, Fujifilm Co., Ltd., Wako Pure Chemical Industries, Ltd., or Chiba Fatty Acid Co., Ltd. can be used.

(F) Zinc oxide

The rubber composition may contain zinc oxide. The content of zinc oxide is, for example, 0.5 to 10 parts by mass

with respect to 100 parts by mass of the rubber component. Conventionally known zinc oxide can be used. For example, products of Mitsui Metal Mining Co., Ltd., Toho Zinc Co., Ltd., HakusuiTech Co., Ltd., Shodo Chemical Industry Co., Ltd., Sakai Chemical Industry Co., Ltd., etc. can be used.

(G) Cross-linking agent and vulcanization accelerator

The rubber composition preferably contains a cross-linking agent such as sulfur. The content of the cross-linking agent is, for example, 0.1 to 10.0 parts by mass with respect to 100 parts by mass of the rubber component.

Examples of sulfur include powdered sulfur, precipitated sulfur, colloidal sulfur, insoluble sulfur, highly dispersible sulfur and soluble sulfur, which are commonly used in the rubber industry. These may be used alone or in combination of two or more.

As the sulfur, for example, products of Tsurumi Chemical Industry Co., Ltd., Karuizawa Sulfur Co., Ltd., Shikoku Chemicals Corporation, Flexis Co., Ltd., Nippon Kanryu Industry Co., Ltd., Hosoi Chemical Industry Co., Ltd., and the like can be used.

Examples of the cross-linking agent other than sulfur include a vulcanizing agent containing a sulfur atom such as Tackylol V200 manufactured by Taoka Chemical Industry Co., Ltd., DURALINK HTS (1,6-hexamethylene-sodium dithiosulfate dihydrate) manufactured by Flexis Co., Ltd. and KA9188 (1,6-bis (N, N'-dibenzylthiocarbamoyldithio) hexane) manufactured by Lanxess Co., Ltd.; and an organic peroxide such as dicumyl peroxide.

The rubber composition preferably contains a vulcanization accelerator. The content of the vulcanization accelerator is, for example, 0.3 to 10.0 parts by mass with respect to 100 parts by mass of the rubber component.

Examples of the vulcanization accelerator include thiazole-based vulcanization accelerator such as 2-mercaptobenzothiazole, di-2-benzothiazolyldisulfide, and N-cyclohexyl-2-benzothiazylsulfenamide; thiuram-based vulcanization accelerators such as tetramethylthiuram disulfide (TMTD), tetrabenzyl thiuram disulfide (TBzTD), and tetrakis (2-ethylhexyl) thiuram disulfide (TOT-N);

sulfenamide-based vulcanization accelerators such as N-cyclohexyl-2-benzothiazolesulfenamide, N-t-butyl- 2-benzothiazolyl sulfenamide, N-oxyethylene-2-benzothiazolesulfenamide, N-oxyethylene-2-benzothiazolesulfenamide, and N, N'-diisopropyl-2-benzothiazolesulfenamide; and guanidine-based vulcanization accelerators such as diphenylguanidine, dioltotrilguanidine, and orthotrilbiguanidine can be mentioned. These may be used alone or in combination of two or more.

(H) Other

In addition to the above components, the rubber composition may compound additives generally used in the tire industry, such as organic peroxides; and fillers such as calcium carbonate, talc, alumina, clay, aluminum hydroxide and mica. The content of these additives is, for example, 0.1 to 200 parts by mass with respect to 100 parts by mass of the rubber component.

(3) Preparation of rubber composition

The rubber composition is produced by a general method, for example, by a manufacturing method including a base kneading step of kneading a rubber component with a filler such as carbon black or silica, and a finish kneading step of kneading the kneaded product obtained in the base kneading step and a cross-linking agent.

The kneading can be performed using a known (sealed) kneader such as a Banbury mixer, a kneader, or an open roll.

The kneading temperature of the base kneading step is, for example, 50 to 200 ° C., and the kneading time is, for example, 30 seconds to 30 minutes. In the base kneading step, in addition to the above components, compounding agents conventionally used in the rubber industry, such as plasticizers such as oil, stearic acid, zinc oxide, antiaging agents, waxes, vulcanization accelerators, etc., may be appropriately added and knead as needed.

In the finish kneading step, the kneaded product obtained in the base kneading step and the cross-linking agent are kneaded. The kneading temperature in the finish kneading step is, for example, room temperature to 80°C, and the kneading time is, for example, 1 to 15 minutes. In the finish kneading step, in addition to the above components, a vulcanization accelerator, zinc oxide and the like may be appropriately added and kneaded as needed.

3. Tire

The pneumatic tire of the present invention is manufactured by a usual method using an unvulcanized rubber composition obtained through the finish kneading step. That is, the unvulcanized rubber composition is extruded according to the shape of each tire member of the tread, and is molded together with other tire members by a normal

method on a tire molding machine to make an unvulcanized tire.

Specifically, the inner liner as a member to ensure the airtightness of the tire, the carcass as a member to withstand the load, impact and filling air pressure received by the tire, a belt member as a member to strongly tighten the carcass to increase the rigidity of the tread, and the like are wound on a molded drum, then both ends of the carcass are fixed to both side edges and a bead part as a member for fixing the tire to the rim is arranged to form a toroid shape, followed by pasting a tread to the central portion of the outer circumference and a sidewall portion as a member that protects the carcass and withstands bending to the outer side in the radial direction; and an unvulcanized tire is manufactured.

In the present embodiment, it is preferable that an inclined belt layer that extends at an angle of 55 to 75° with respect to the tire circumferential direction is provided as the belt, and thereby, the durability of the tire is ensured and the rigidity of the tread can be sufficiently maintained.

Then, the produced unvulcanized tire is heated and pressurized in a vulcanizer so as to have a shape satisfying the above-mentioned W1/W2 and S1/S2 to obtain a tire. The vulcanization step can be carried out by applying a known vulcanization means. The vulcanization temperature is, for example, 120 to 200°C, and the vulcanization time is, for example, 5 to 15 minutes.

The rubber composition described above can be used for treads of various tires, for example, tires for passenger cars; tires for trucks and buses; tires for two-wheeled vehicles; high-performance tires; winter tires such as studless tires. These tires may be run-flat tires having a side reinforcing layer; tires with sound absorbing member having a sound absorbing member such as a sponge in the tire cavity; tires with sealing member having a sealant that can seal the tire at the time of puncture inside the tire or in the tire cavity; or

tires with electronic component having an electronic component such as a sensor or a wireless tag inside the tire or in the tire cavity.

[EXAMPLE]

Hereinafter, the present invention will be described in more detail with reference to examples.

1. Manufacture of rubber composition for tread

First, a rubber composition for tread was produced.

(1) Compounding material

First, each compounding material shown below was prepared.

(a) Rubber component

(A) Styrene-butadiene rubber (SBR): NS616 manufactured by Nippon Zeon Corporation
(B) Butadiene rubber (BR): BR1220 manufactured by Nippon Zeon Corporation (Cis 1,4 content; 96%)

(b) Compounding materials other than rubber components

(A) Carbon black: N220 manufactured by Asahi Carbon Co., Ltd.
(B) Silica 1: Ultrasil VN3 manufactured by Evonik Industries, Inc.
(Average primary particle size: 18 nm)
(C) Silica 2: Ultrasil 9100Gr manufactured by Evonik Industries, Inc.
(Average primary particle size: 15 nm)
(D) Silane coupling agent: Si266 manufactured by Evonik Industries, Inc.
(E) Zinc oxide: Zinc white No. 1 manufactured by Mitsui Mining & Smelting Co., Ltd.
(F) Stearic acid: Stearic acid "TSUBAKI" manufactured by NOF CORPORATION
(G) Oil: Process X-140 manufactured by Japan Energy Co., Ltd.
(H) Anti-aging agent: Antigen 6C manufactured by Sumitomo Chemical Co., Ltd. (N- (1,3-dimethylbutyl) -N'-phenyl-p-phenylenediamine)
(I) Wax: Sunknock N manufactured by Ouchi Shinko Kagaku Kogyo Co., Ltd.
(J) Crosslinking agent and vulcanization accelerator

Sulfur: Powdered sulfur manufactured by Karuizawa Sulfur
Vulcanization accelerator 1: Noxeller CZ manufactured by Ouchi Shinko Kagaku Kogyo Co., Ltd. (N-cyclohexyl-2-benzothiazolyl sulphenamide)
Vulcanization accelerator 2: Noxeller D manufactured by Ouchi Shinko Kagaku Kogyo Co., Ltd. (N, N'-diphenylguanidine)

(2) Production of rubber composition

In accordance with the formulation shown in Table 1, materials other than sulfur and the vulcanization accelerator were kneaded for 5 minutes under the condition of 150°C using a Banbury mixer to obtain a kneaded product. Note that each compounding amount is a mass part.

[Table 1]

| | Formulation | | | | | | | | | |
|---|---|---|---|---|---|---|---|---|---|---|
| | 1 | 2 | 3 | 4 | 5 | 6 | 7 | 8 | 9 | 10 |
| [Rubber component] | | | | | | | | | | |
| SBR | 70 | 70 | 70 | 70 | 90 | 70 | 70 | 80 | 70 | 50 |
| BR | 30 | 30 | 30 | 30 | 10 | 30 | 30 | 20 | 30 | 50 |
| [Other compounding materials] | | | | | | | | | | |
| Carbon | 10 | 10 | 10 | 10 | 10 | 10 | 10 | 10 | 10 | 10 |
| Silica 1 | | | 70 | 60 | | | | | | |
| Silica 2 | 20 | 50 | | | 70 | 70 | 90 | 90 | 140 | 50 |
| Shipping agent | 1.6 | 4.0 | 5.6 | 5.6 | 5.6 | 5.6 | 7.2 | 7.2 | 11.2 | 4.0 |
| Oil | 5 | 25 | 25 | 25 | 25 | 25 | 50 | 50 | 95 | 25 |
| Wax | 2 | 2 | 2 | 2 | 2 | 2 | 2 | 2 | 2 | 2 |
| Anti-aging agent | 2 | 2 | 2 | 2 | 2 | 2 | 2 | 2 | 2 | 2 |
| Stearic acid | 2.5 | 2.5 | 2.5 | 2.5 | 2.5 | 2.5 | 2.5 | 2.5 | 2.5 | 2.5 |
| Zinc oxide | 2 | 2 | 2 | 2 | 2 | 2 | 2 | 2 | 2 | 2 |
| [Crosslinking agent and vulcanization accelerator] | | | | | | | | | | |
| Sulfur | 1.5 | 1.5 | 1.5 | 1.5 | 1.5 | 1.5 | 1.5 | 1.5 | 1.5 | 1.5 |
| Vulcanization accelerator 1 | 2 | 2 | 2 | 2 | 2 | 2 | 2 | 2 | 2 | 2 |
| Vulcanization accelerator 2 | 1.5 | 1.5 | 1.5 | 1.5 | 1.5 | 1.5 | 1.5 | 1.5 | 1.5 | 1.5 |
| [Tread characteristics] | | | | | | | | | | |
| tanδ @ 5°C | 0.19 | 0.26 | 0.37 | 0.40 | 0.61 | 0.45 | 0.50 | 0.55 | 0.64 | 0.24 |
| (A) tanδ @ 20°C | 0.15 | 0.19 | 0.23 | 0.25 | 0.32 | 0.25 | 0.30 | 0.33 | 0.32 | 0.18 |
| (B) tanδ @ 50°C | 0.12 | 0.16 | 0.19 | 0.16 | 0.24 | 0.22 | 0.27 | 0.28 | 0.29 | 0.15 |
| \|(A) - B)\| | 0.03 | 0.03 | 0.04 | 0.09 | 0.08 | 0.03 | 0.03 | 0.05 | 0.03 | 0.03 |
| E'@ 20°C (MPa) | 2.2 | 5.2. | 8 | 6 | 11.5 | 10.5 | 12 | 12.5 | 11 | 4.8 |

2. Manufacturing of tire

Next, sulfur and a vulcanization accelerator were added to the obtained rubber composition for tread and kneaded under the condition of 80°C for 5 minutes using an open roll to obtain an unvulcanized rubber composition. The obtained unvulcanized rubber composition was formed into a tread having each shape shown in Table 2, and pasted together with other tire members to form an unvulcanized tire, which was press-vulcanized for 10 minutes under the condition of 170°C. Thus, a test tire (size: 195/65R15) was manufactured.

In Table 2, the "groove width ratio W1/W2" is the ratio of the groove width W1 at the groove depth 90% position

when the groove depth of the groove bottom is 100% in the outermost shoulder main groove described above to the groove width W2 on the tread surface; and "the cross-sectional area ratio S1/S2 of the main groove" is the ratio of the cross-sectional area S1 of the shoulder main groove to the cross-sectional area S2 of the crown main groove. The "crown main groove cross-sectional area/ground contact surface width" is the ratio of the total cross-sectional area of the crown main groove ($mm^2$) to the width (mm) of ground contact surface, and is "tread ground contact width/section width TW / SW" is the ratio of the tread ground contact width TW to SW.

Then, in each test tire, the ratio of the land area to the ground contact surface of the tread was set to 70%. This measurement can be done, for example, by a method wherein the tire is attached to a regular rim, a regular internal pressure is applied, the tire is allowed to stand at 25°C for 24 hours, then black ink is applied to the surface of the tread, a regular load is applied to press the tire against thick paper and to transfer the ink to the paper.

3. Performance evaluation test

(1) Physical characteristics of the tread

For the tread rubber (after vulcanization) of each composition cut out from each test tire, loss tangent (tanδ) at 5°C, 20°C and 50°C, and dynamic storage elastic modulus E'(MPa) at 20°C were measured, using a viscoelasticity measuring device manufactured by Leometrics, under the conditions of frequency 10 Hz, initial strain 2%, and dynamic strain rate 1%. The results are shown in Table 1.

(2) Wet grip performance evaluation test

Each test tire was mounted to all wheels of the vehicle (domestic FF vehicle, displacement 2000cc), and the braking distance from the initial speed of 100km/h was determined on the test course of the wet asphalt road surface. Then, the relative value when the braking distance in Comparative Example 1 is 100 is obtained by the following formula. The larger the value, the better the wet grip performance on a wet road surface.

Wet grip performance index (wet road surface) = (Braking distance of Comparative Example 1/Braking distance of test tire) × 100

(3) Steering stability evaluation test

Each test tire was mounted to all wheels of the vehicle (domestic FF vehicle, displacement 2000cc), and the vehicle went around the test course on the dry asphalt road surface at a speed of 80km/h, and the lap time at that time was measured and evaluated. The evaluation was made by indexing according to the following formula with reference to Comparative Example 1. The larger the value, the better the handling characteristics and the better the steering stability.

Steering stability = [lap time of Comparative Example 1/lap time of test tire] × 100

(4) Evaluation result

Table 2 shows the both results of the wet grip performance evaluation test and the steering stability evaluation test. The larger the sum of the evaluations, the more compatible the wet grip performance and the steering stability.

[Table 2]

| | Comparative example | | | Example | | | Comparative example | | Example | | | | | Comparative example | |
|---|---|---|---|---|---|---|---|---|---|---|---|---|---|---|---|
| | 1 | 2 | 3 | 1 | 2 | 3 | 4 | 5 | 4 5 6 | | 6 | 7 | 8 | 6 | 7 |
| Tread formulation | Formulation | | | | | | | | | | | | | | |
| | 1 | 2 | 3 | 3 | 3 | 3 | 4 | 5 | 6 | 6 | 7 | 8 | 8 | 9 | 10 |
| [Tread shape] | | | | | | | | | | | | | | | |
| Groove width ratio W1/W2 | 0.30 | 0.30 | 0.25 | 0.30 | 0.50 | 0.75 | 0.30 | 0.30 | 0.50 | 0.75 | 0.50 | 0.50 | 0.75 | 0.75 | 0.30 |
| Cross-sectional area ratio of main grove S1/S2 | 0.40 | 0.40 | 0.35 | 0.40 | 0.50 | 0.60 | 0.40 | 0.40 | 0.50 | 0.60 | 0.50 | 0.50 | 0.60 | 1.00 | 0.40 |
| Number of main grooves (number of divisions) | 3 (4) | 3 (4) | 3 (4) | 3 (4) | 4 (5) | 5 (6) | 4 (5) | 4 (5) | 4 (5) | 5 (6) | 4 (5) | 4 (5) | 5 (6) | 4 (5) | 3 (4) |
| Crown main groove cross-sectional area / contact patch width | 0.4 | 0.4 | 0.35 | 0.4 | 1.0 | 1.4 | 0.4 | 0.4 | 1.0 | 1.4 | 1.0 | 1.0 | 1.4 | 1.0 | 0.4 |
| Tread grounding width / section width TW/SW(%) | 55 | 55 | 50 | 55 | 70 | 80 | 55 | 55 | 70 | 80 | 70 | 70 | 80 | 70 | 55 |
| [Evaluation results] | | | | | | | | | | | | | | | |
| Wet grip performance | 100 | 95 | 95 | 115 | 125 | 115 | 95 | 95 | 130 | 130 | 130 | 130 | 130 | 95 | 90 |
| Steering stability | 100 | 90 | 95 | 120 | 130 | 120 | 90 | 95 | 130 | 130 | 130 | 130 | 130 | 100 | 100 |

It can be seen from Table 2 that it is possible to provide pneumatic tires that are compatible with both steering stability and wet grip performance, when the tread having a shape in which (W1/W2) is 0.30 to 0.75 and (S1/S2) is 0.40 to 1.0 is formed by using the rubber composition having 5°Ctan δ of 0.10 to 0.60, | 20°Ctan δ-50°Ctan δ| of 0.10 or less, and a 20°C E' of 8.0 MPa or more.

Although the present invention has been described above based on the embodiments, the present invention is not limited to the above embodiments. Various modifications can be made to the above embodiments within the scope of the invention as defined by the appended claims.

[DESCRIPTION OF THE REFERENCE NUMERALS]

| | |
|---|---|
| 1 | tire |
| 10 | tread |
| 11, 13 | circumferential main groove (shoulder main groove) |
| 12 | circumferential main groove (crown main groove) |
| 20 | land portion |
| D | groove depth |
| S1, S2, S3 | (main groove) cross-sectional area |
| W1, W2 | groove width |
| SW | section width |
| TW | tread ground contact width |

**Claims**

1. A pneumatic tire (1) having a tread (10) having two or three circumferential main grooves (11, 12, 13) extending continuously in the circumferential direction of the tire (1), wherein

    the tread (10) has as the circumferential main grooves (11, 12, 13) a crown main groove (12) formed in the widthwise central portion of the tread (10) and a shoulder main groove (11, 13) formed in the widthwise end of the tread (10),
    the shoulder main groove (11) positioned on the outermost side when mounted on a vehicle has the ratio of the groove width W1 at the groove depth 90% position when the groove depth at the groove bottom is 100% to the groove width W2 on the tread surface (W1/W2) of 0.30 to 0.75,
    the ratio of the cross-sectional area S1 of the shoulder main groove (11) to the cross-sectional area S2 of the crown main groove (12) (S1/S2) is 0.40 to 1.0, **characterized in that**
    the rubber composition forming the tread (10) has the following characteristics wherein
    5°Ctanδ is 0.10 to 0.60,
    |20°Ctanδ-50°Ctanδ| is 0.10 or less, and
    20°CE' is 8.0 MPa or more, wherein
    5°Ctanδ, 20°Ctanδ, and 50°Ctanδ is a loss tangent measured at 5°C, 20°C, and 50°C, respectively, and 20°CE' is the dynamic storage elastic modulus measured at 20°C, and wherein the measurements are carried out under the conditions of a frequency of 10 Hz, an initial strain of 2%, and a dynamic strain rate of 1% using a viscoelasticity measuring device; and
    regarding the tread (10), the ratio of the cross-sectional area expressed in $mm^2$ of the crown main groove (12) to the width expressed in mm of the ground contact surface is 0.4 to 1.4, wherein
    "the ground contact surface of the tread" refers to the outer peripheral surface of the tire that comes into contact with the road surface over the entire circumference in a state in which the tire is rim-assembled on the regular rim and is rolled with a load corresponding to the maximum load capacity at the regular state where no load is applied and the regular internal pressure is applied.

2. The pneumatic tire (1) according to claim 1, wherein the 5°Ctan δ is 0.40 to 0.60.

3. The pneumatic tire (1) according to claim 1 or 2, wherein the |20°Ctanδ-50°Ctanδ| is more than 0 and not more than 0.05.

4. The pneumatic tire (1) according to any one of claims 1 to 3 wherein

the tread (10) is divided into four regions by three circumferential main grooves (11, 12, 13), and
the radius of curvature of the contour line of the region closest to the tire equator among the four or more regions is larger than the radius of curvature of any of the contour lines of the other regions.

**5.** The pneumatic tire (1) according to any one of claims 1 to 4, wherein, regarding the tread (10),
the radius of curvature in the region outside the tire width direction of the shoulder main groove (11) is 0.8 to 1.7 times the tread ground contact half width.

**6.** The pneumatic tire according to any one of claims 1 to 5, wherein, regarding the tread (10),
the ratio of the tread ground contact width TW to the section width SW (TW/SW) is 55 to 80%.

**7.** The pneumatic tire (1) according to any one of claims 1 to 6, wherein the rubber composition forming the tread (10) contains a diene-based rubber as a rubber component.

**8.** The pneumatic tire (1) according to any one of claims 1 to 7, wherein the diene-based rubber contains styrene-butadiene rubber, and the amount of styrene in the styrene-butadiene rubber is less than 30% by mass.

**9.** The pneumatic tire (1) according to any one of claims 1 to 8, wherein
the rubber composition forming the tread (10) contains a plasticizer component of 20 parts by mass or more and 60 parts by mass or less with respect to 100 parts by mass of the rubber component.

**10.** The pneumatic tire (1) according to any one of claims 1 to 9, wherein the rubber composition forming the tread (10) contains silica of more than 50 parts by mass and less than 150 parts by mass with respect to 100 parts by mass of the rubber component.

**11.** The pneumatic tire (1) according to claim 10, wherein the silica has a BET specific surface area of 180 $m^2/g$ or more and 300 $m^2/g$ or less, as measured by the BET method according to ASTM D3037-93.

**12.** The pneumatic tire (1) according to any one of claims 1 to 11, wherein the surface of the tread (10) further has a circumferential groove having a cross-sectional area of less than 10 $mm^2$ in the tire width direction and / or a fine groove extending in a direction other than the circumferential direction.

**13.** The pneumatic tire (1) according to any one of claims 1 to 12, wherein, in the ground contact surface of the tread (10), the ratio of the land portion to the total area of the ground contact surface of is 35 to 80%.

**Patentansprüche**

**1.** Luftreifen (1) mit einem Laufstreifen (10) mit zwei oder drei Umfangshauptrillen (11, 12, 13), die sich durchgehend in der Umfangsrichtung des Reifens (1) erstrecken, wobei

der Laufstreifen (10) als die Umfangshauptrillen (11, 12, 13) eine Kronenhauptrille (12), die in Breitenrichtung im zentralen Abschnitt des Laufstreifens (10) gebildet ist, und eine Schulterhauptrille (11, 13) die in Breitenrichtung am Ende des Laufstreifens (10) gebildet ist, aufweist,
die Schulterhauptrille (11), die sich, wenn an einem Fahrzeug montiert, an der äußersten Seite befindet, das Verhältnis der Rillenbreite W1 an der 90%-Rillentiefe-Position, wenn die Rillentiefe am Rillenboden 100% ist, zur Rillenbreite W2 an der Laufstreifenoberfläche (W1/W2) von 0,30 bis 0,75 aufweist,
das Verhältnis der Querschnittsfläche S1 der Schulterhauptrille (11) zur Querschnittsfläche S2 der Kronenhauptrille (12) (S1/S2) 0,40 bis 1,0 beträgt, **dadurch gekennzeichnet, dass**
die Kautschukzusammensetzung, die den Laufstreifen (10) bildet, die folgenden Eigenschaften aufweist, wobei
5°Ctanδ 0,10 bis 0,60 beträgt,
|20°Ctanδ-50°Ctanδ| 0,10 oder weniger beträgt, und
20°CE' 8,0 MPa oder mehr beträgt, wobei
5°Ctanδ, 20°Ctanδ und 50°Ctanδ ein bei 5°C, 20°C beziehungsweise 50°C gemessener Verlusttangens ist, und
20°CE' der bei 20°C gemessene dynamische elastische Speichermodul ist, und wobei die Messungen unter den Bedingungen einer Frequenz von 10 Hz, einer anfänglichen Dehnung von 2% und einer dynamischen Dehnungsrate von 1% unter Verwendung einer Viskoelastizitätsmessvorrichtung durchgeführt sind; und
hinsichtlich des Laufstreifens (10) das Verhältnis der in $mm^2$ ausgedrückten Querschnittsfläche der Kronen-

hauptrille (12) zur in mm ausgedrückten Breite der Bodenkontaktoberfläche 0,4 bis 1,4 beträgt,

wobei
"die Bodenkontaktoberfläche des Laufstreifens" die Außenumfangsoberfläche des Reifens bezeichnet, die über den gesamten Umfang mit der Straßenoberfläche in Berührung kommt, in einem Zustand, in dem der Reifen auf die reguläre Felge aufgezogen ist und gerollt wird unter einer Last entsprechend der maximalen Tragfähigkeit im regulären Zustand, worin keine Last angewendet ist und der reguläre Innendruck angewendet ist.

**2.** Luftreifen (1) nach Anspruch 1, wobei der 5°Ctanδ 0,40 bis 0,60 beträgt.

**3.** Luftreifen (1) nach Anspruch 1 oder 2, wobei der |20°Ctanδ-50°Ctanδ| mehr als 0 und nicht mehr als 0,05 beträgt.

**4.** Luftreifen (1) nach einem der Ansprüche 1 bis 3, wobei

der Laufstreifen (10) durch drei Umfangshauptrillen (11, 12, 13) in vier Bereiche unterteilt ist, und
der Krümmungsradius der Konturlinie des Bereichs, der unter den vier oder mehr Bereichen dem Reifenäquator am nächsten ist, größer ist als der Krümmungsradius jedweder der Konturlinien der anderen Bereiche.

**5.** Luftreifen (1) nach einem der Ansprüche 1 bis 4, wobei, hinsichtlich des Laufstreifens (10),
der Krümmungsradius in dem Bereich außerhalb der Reifenbreitenrichtung der Schulterhauptrille (11) das 0,8- bis 1,7-fache der Laufstreifen-Bodenkontakt-Halbbreite beträgt.

**6.** Luftreifen nach einem der Ansprüche 1 bis 5, wobei, hinsichtlich des Laufstreifens (10),
das Verhältnis der Laufstreifen-Bodenkontakt-Breite TW zur Schnittbreite SW (TW/SW) 55 bis 80% beträgt.

**7.** Luftreifen (1) nach einem der Ansprüche 1 bis 6, wobei die Kautschukzusammensetzung, die den Laufstreifen (10) bildet, einen Dienbasierten Kautschuk als eine Kautschukkomponente enthält.

**8.** Laufstreifen (1) nach einem der Ansprüche 1 bis 7, wobei der Dien-basierte Kautschuk Styrol-Butadien-Kautschuk enthält, und die Menge an Styrol in dem Styrol-Butadien-Kautschuk weniger als 30 Massen-% beträgt.

**9.** Luftreifen (1) nach einem der Ansprüche 1 bis 8, wobei
die Kautschukzusammensetzung, die den Laufstreifen (10) bildet, eine Weichmacherkomponente von 20 Massenteilen oder mehr und 60 Massenteilen oder weniger enthält, bezogen auf 100 Massenteile der Kautschukkomponente.

**10.** Luftreifen (1) nach einem der Ansprüche 1 bis 9, wobei die Kautschukzusammensetzung, die den Laufstreifen (10) bildet, mehr als 50 Massenteile und weniger als 150 Massenteile Siliziumdioxid enthält, bezogen auf 100 Massenteile der Kautschukkomponente.

**11.** Luftreifen (1) nach Anspruch 10, wobei das Siliziumdioxid eine spezifische BET-Oberfläche von 180 $m^2$/g oder mehr und 300 $m^2$/g oder weniger aufweist, wie durch das BET-Verfahren gemäß ASTM D3037-93 gemessen.

**12.** Luftreifen (1) nach einem der Ansprüche 1 bis 11, wobei die Oberfläche des Laufstreifens (10) zudem eine Umfangsrille mit einer Querschnittsfläche von weniger als 10 $mm^2$ in der Reifenbreitenrichtung und/oder eine sich in einer anderen Richtung als der Umfangsrichtung erstreckende Feinrille aufweist.

**13.** Luftreifen (1) nach einem der Ansprüche 1 bis 12, wobei in der Bodenkontaktoberfläche des Laufstreifens (10) das Verhältnis des Positivprofilanteils zur Gesamtfläche der Bodenkontaktoberfläche 35 bis 80% beträgt.

## Revendications

**1.** Pneumatique (1) comportant une bande de roulement (10) présentant deux ou trois rainures principales circonférentielles (11, 12, 13) s’étendant de manière continue dans la direction circonférentielle du pneumatique (1), dans lequel

la bande de roulement (10) présente, en tant que rainures principales circonférentielles (11, 12, 13), une rainure

principale de couronne (12) formée dans la partie centrale dans le sens de la largeur de la bande de roulement (10) et une rainure principale d'épaulement (11, 13) formée à l'extrémité dans le sens de la largeur de la bande de roulement (10),

la rainure principale d'épaulement (11), positionnée sur le côté le plus extérieur lorsque le pneumatique est monté sur un véhicule, présente le rapport entre la largeur de rainure W1 dans une position de profondeur de rainure de 90 % lorsque la profondeur de la rainure au fond de ladite rainure est de 100% par rapport à la largeur de rainure W2 sur la surface de la bande de roulement (W1/W2) de 0,30 à 0,75,

le rapport de la superficie en coupe transversale S1 de la rainure principale d'épaulement (11) par rapport à la superficie en coupe transversale S2 de la rainure principale de couronne (12) (S1/S2) est de 0,40 à 1,0,

**caractérisé en ce que**

la composition de caoutchouc qui forme la bande de roulement (10) présente les caractéristiques suivantes, dans lequel

5 °Ctanδ est égal à 0,10 à 0,60,

| 20 °Ctanδ - 50 °Ctanδ| est de 0,10 ou moins, et

20 °CE' est de 8,0 MPa ou plus, dans lequel

5 °Ctanδ, 20 °Ctanδ, et 5 0°Ctanδ représentent une tangente de perte mesurée à 5 °C, à 20 °C, et à 50 °C, respectivement, et 20 °CE' est le module élastique de stockage dynamique mesuré à 20 °C, et dans lequel les mesures sont réalisées dans les conditions d'une fréquence de 10 Hz, une contrainte initiale de 2 %, et un taux de contrainte dynamique de 1 % en utilisant un dispositif de mesure de la viscoélasticité ; et

en ce qui concerne la bande de roulement (10), le rapport de la superficie en coupe transversale exprimé en $mm^2$ de la rainure principale de couronne (12) sur la largeur exprimée en mm de la surface de contact au sol est de 0,4 à 1,4, dans lequel

« la surface de contact au sol de la bande de roulement » se réfère à la surface périphérique extérieure du pneumatique qui entre en contact avec la surface de la route sur toute la circonférence dans un état dans lequel le pneumatique est monté sur une jante sur la jante normale et roule avec une charge correspondant à la capacité de charge maximale où aucune charge n'est appliquée et la pression interne régulière est appliquée.

**2.** Pneumatique (1) selon la revendication 1, dans lequel le 5 °Ctanδ est de 0,40 à 0,60.

**3.** Pneumatique (1) selon la revendication 1 ou 2, dans lequel le | 20 °Ctanδ - 50 °Ctanδ | est de plus de 0 et de pas plus de 0,05.

**4.** Pneumatique (1) selon l'une quelconque des revendications 1 à 3, dans lequel

la bande de roulement (10) est divisée en quatre régions par trois rainures principales circonférentielles (11, 12, 13), et

le rayon de courbure de la ligne de contour de la région la plus proche du centre du pneumatique parmi les quatre régions ou plus est supérieur au rayon de courbure de n'importe laquelle des lignes de contour des autres régions.

**5.** Pneumatique (1) selon l'une quelconque des revendications 1 à 4, dans lequel, en ce qui concerne la bande de roulement (10),
le rayon de courbure dans la région en dehors de la direction de la largeur du pneumatique de la rainure principale d'épaulement (11) est de 0,8 à 1,7 fois la demi-largeur de contact avec le sol de la bande de roulement.

**6.** Pneumatique selon l'une quelconque des revendications 1 à 5, dans lequel, en ce qui concerne la bande de roulement (10),
le rapport de la largeur de contact au sol de la bande de roulement TW sur la largeur de la section SW (TW/SW) est de 55 à 80 %.

**7.** Pneumatique (1) selon l'une quelconque des revendications 1 à 6, dans lequel la composition de caoutchouc formant la bande de roulement (10) contient un caoutchouc à base de diène comme composant de caoutchouc.

**8.** Pneumatique (1) selon l'une quelconque des revendications 1 à 7, dans lequel le caoutchouc à base de diène contient du caoutchouc styrène-butadiène, et la quantité de styrène dans le caoutchouc styrène-butadiène est de moins de 30 % en masse.

**9.** Pneumatique (1) selon l'une quelconque des revendications 1 à 8, dans lequel

la composition de caoutchouc formant la bande de roulement (10) contient un composant plastifiant de 20 parties en masse ou plus et de 60 parties en masse ou moins par rapport à 100 parties en masse du composant de caoutchouc.

**10.** Pneumatique (1) selon l'une quelconque des revendications 1 à 9, dans lequel la composition de caoutchouc formant la bande de roulement (10) contient de la silice pour plus de 50 parties en masse et moins de 150 parties en masse par rapport à 100 parties en masse du composant de caoutchouc.

**11.** Pneumatique (1) selon la revendication 10, dans lequel la silice présente une superficie spécifique BET de 180 $m^2$/g ou plus et de 300 $m^2$/g ou moins, telle que mesurée par le procédé BET selon la norme ASTM D3037-93.

**12.** Pneumatique (1) selon l'une quelconque des revendications 1 à 11, dans lequel la surface de la bande de roulement (10) présente en outre une rainure circonférentielle présentant une superficie en coupe transversale inférieure à 10 $mm^2$ dans le sens de la largeur du pneumatique et/ou une rainure fine s'étendant dans une direction différente de la direction circonférentielle.

**13.** Pneumatique (1) selon l'une quelconque des revendications 1 à 12, dans lequel, dans la surface de contact avec le sol de la bande de roulement (10), le rapport de la partie terrestre sur la superficie totale de la surface de contact avec le sol est de 35 à 80 %.

[FIG.1]

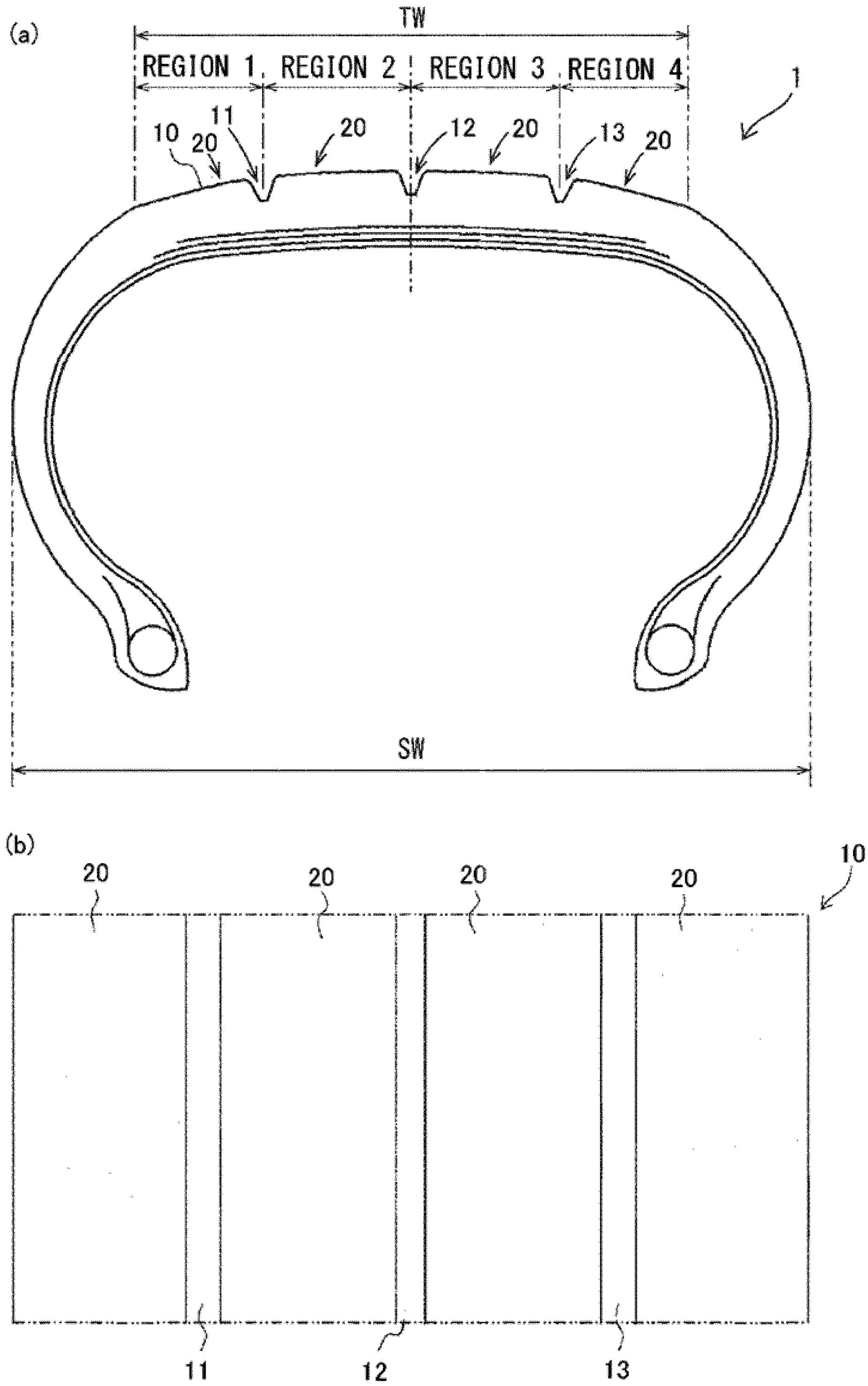
(a)
TW
REGION 1
REGION 2
REGION 3
REGION 4
1
10
11
12
13
20
SW
(b)
20
10
11
12
13

[FIG.2]

(a)

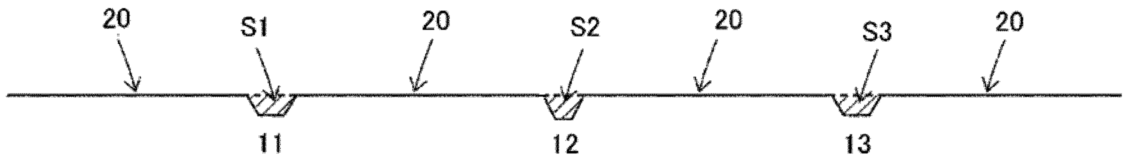


(b)

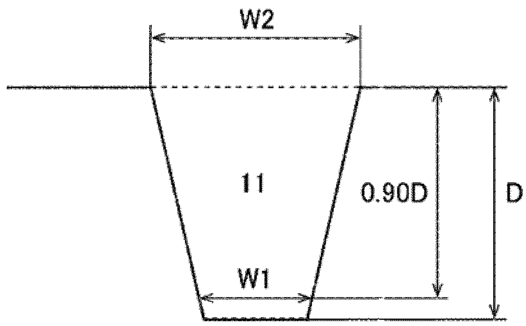

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2012229285 A
- JP 2013107989 A
- JP 2014177238 A
- JP 2015147543 A
- EP 3279012 A1
- JP 2017206194 A
- JP 2010111753 A
- US 4414370 A
- JP S596207 A
- JP H558005 B
- JP H1313522 A
- US 5010166 A